# EUROPEAN PATENT APPLICATION

(11) **EP 2 797 036 A1**
(43) Date of publication of application: **29.10.2014**
(21) Application number: 12860109.3
(22) Date of filing: 01.02.2012
(51) Int. Cl.: G06K 19/077

(54) **UHF RFID TAG COMPRISING SEPARATE LOOP PORTION SHEET AND DIPOLE PORTION SHEET**

(30) Priority: 22.12.2011 KR 20110011408 U
(71) Applicant: Exax Inc., Gumi-si, Kyungsangbuk-do 730-030 (KR)
(72) Inventor: KANG, Min Suk, Cheonan-si Chungcheongnam-do 331-814 (KR); YANG, Young Mi, Cheonan-si Chungcheongnam-do 331-814 (KR); GOO, Young Ran, Cheonan-si Chungcheongnam-do 331-814 (KR); HAN, Seung Jun, Cheonan-si Chungcheongnam-do 331-814 (KR); LEE, Hyun Mi, Cheonan-si Chungcheongnam-do 330-768 (KR); HEO, Soon Yeong, Cheonan-si Chungcheongnam-do 331-982 (KR)
(74) Representative: Reedy, Orlaith
(86) International application number: PCT/KR2012/000796
(87) International publication number: WO 2013/094812

(57) **Abstract**

The present invention relates to a UHF RFID tag, and provides a set of UHF RFID tag comprising a loop-patterned sheet on which a RFID chip is mounted so as to form a closed loop and a dipole-patterned sheet that is separate from the other.

According to the present invention, loop-patterned sheets having simple form and small size can be mass-produced in a few simple types. A mounting process for a RFID chip on the loop-patterned sheets which require precise work can be simplified. In addition, a set of RFID tag according to the present invention can be applied in various environments by combining a few types of the loop-patterned sheet and various types of dipole-patterned sheets.

## Description

### Technical Field

The present invention relates to a UHF RFID tag consisting of a loop-patterned sheet and a dipole-patterned sheet that are separate from each other.

### Background Art

Generally, a UHF RFID tag includes an antenna formed on an insulation sheet and a RFID chip connected to the antenna. The antenna of the UHF RFID tag again structurally consists of a dipole portion for sending and receiving radio waves and for generating electromotive force and a loop portion to which an RFID chip is connected to form a closed loop. The dipole portion and the loop portion are monolithically formed on the same sheet and electrically connected to each other.

In such a UHF RFID tag, various forms of antennas are prepared according to requirements such as frequency in use, sensitivity and recognition distance of a reader. The antenna of the UHF RFID tag is generally formed by photolithographical technology on a copper clad insulation sheet, as in the case of generally manufacturing a printed circuit board.

Each RFID chip is electrically connected to each antenna formed on an insulation sheet by using surface mounting technology, and then each UHF RFID tag is produced by cutting the insulation sheet. The process of forming an antenna using photolithographical technology including the steps of forming a resist pattern, etching the pattern and peeling off the resist, similar to a process of manufacturing a flexible printed circuit board (FPCB), is relatively complicated and is difficult to carry out together with a surface mounting process continuously because the one is different from the other in precision and in technical characteristics. There are problems in that all antenna designs must be varied depending on the kind of products, and in that the surface mounting of an RFID chip must be adjusted depending on antenna designs.

### Disclosure

### Technical Problem

The present inventors recognized that the structure of a loop portion, to which an RFID chip is connected to form a closed loop, is very simple and limited compared with that of a dipole portion and found that the dipole portion and the loop portion can be separate from each other. Based on the finding and the recognition, the present invention was devised.

Accordingly, the present invention intends to provide a UHF RFID tag which has high adaptability and one which can be produced through continuous processes including RFid chip mounting process that requires precision.

### Technical Solution

According to the present invention, there is provided a set of UHF RFID tag consisting of a loop-patterned sheet on which a RFID chip is mounted so as to form a closed loop and a dipole-patterned sheet which is separate from the loop-patterned sheet.

In the present invention, the loop-patterned sheet and the dipole-patterned sheet may be attached to each other or may be spaced apart from each other if induced electromotive force is generated enough to satisfy a necessary recognition distance. An insulator such as packing paper, having a thickness of 5 mm or less, although tolerable thickness depends on the kind of intermediate materials, may be interposed between the loop-patterned sheet and the dipole-patterned sheet. Generally, as the thickness of the insulator increases, a recognition distance linearly decreases. When the loop-patterned sheet and the dipole-patterned sheet are attached to each other without an intermediate, inconformity of 4 cm or less in the X axis (longitudinal direction) and inconformity of 10 cm or less in the Y axis(lateral direction) in alignment of an antenna are tolerable. Therefore, a process of attaching the loop-patterned sheet and the dipole-patterned sheet to another article or attaching the loop-patterned sheet and the dipole-patterned sheet to each other can be easily carried out without high degree of precision. Further, if necessary, the dipole-patterned sheet may be attached to the outer surface of packing paper and the loop-patterned sheet may be attached to the inner surface of the packing paper to obtain security or appearance. Conversely, the loop-patterned sheet may be attached to the outer surface and the dipole sheet may be attached to the inner surface.

The loop-patterned sheet and the dipole-patterned sheet may be prepared by etching a conventional copper clad insulating sheet using photolithographical technology, and preferably may be prepared by direct printing onto a substrate with conductive ink.

The conductive ink includes metal powder and/or an organic metal precursor and a binder. The metals in the organic metal precursor and in the metal powder are preferably silver. Korean Patent Nos. 709724 and 711505, filed by the present applicant, disclosed metal paste and silver paste for forming a conductive pattern.

The raw material of the substrate is not limited, but may be plastic resin having heat resistance at 80°C or higher, for example, polyester, polycarbonate or polyimide. Further, as the substrate, various kinds of paper may be used.

The direct printing includes screen printing, flexo printing, rotary printing, gravure printing, offset printing and inkjet printing. The loop-patterned sheet and the dipole-patterned sheet are produced by printing patterns with conductive paste on the substrate to have a loop pattern and a dipole pattern respectively, and are heat-treated. Such printing and such heat treatment may be continuously processed by a roll to roll method. An RFid chip is mounted on the loop-patterned sheet, and then thermal pressing is applied to connect the RFID chip to the loop. If necessary, the formation of the loop-patterned sheet and the mounting of the RFID chip may be processed in continuous operations.

When the dipole-patterned sheet and the loop-patterned sheet are laminated or attached to each other, the printed surfaces may face each other to allow the loop and the dipole to touch each other, or are disposed in parallel to each other to let the loop and the dipole spaced apart from each other with insulation therebetween. A double-faced adhesive tape made of a conductive carbon tape or one made of a general-purpose insulation tape may be used for attaching the loop-patterned sheet to the dipole-patterned sheet.

### Advantageous Effects

According to the present invention, loop-patterned sheets having simple form and small size can be mass-produced in a few simple types. A mounting process for a RFID chip on a loop-patterned sheet which requires precise work can be simplified. In addition, a set of RFID tag according to the present invention can be applied in various environments by combining a few types of the loop-patterned sheets and various types of dipole-patterned sheet.

### Description of Drawings

FIGS. 1 and 2 are plane views showing the chip-mounted loop-patterned sheet and dipole-patterned sheet prepared in Example 1 respectively.
FIG. 3 is a plane view showing a sheet of graph paper on which the alignment position and alignment degree of a set of RFID tag containing the chip-mounted loop-patterned sheet and dipole-patterned sheet prepared in Example 1 are measured.
FIGS. 4 to 6 are three-dimensional graphs showing the recognition distances of a set of RFID tag containing the chip-mounted loop-patterned sheet and dipole-patterned sheet prepared in Example 1 at frequencies of 870 MHz, 910 MHz and 920 MHz depending on the alignment degree thereof respectively.
FIG. 7 is a graph showing the recognition distance depending on the kind of tape and the direction of alignment.
FIG. 8 is a graph showing the recognition distance depending on the thickness of tape.

### Mode for Invention

Hereinafter, the present invention will be described in more detail by the following Examples. These Examples are set forth to illustrate the present invention, and the scope of the present invention is not limited thereto.

### Example 1

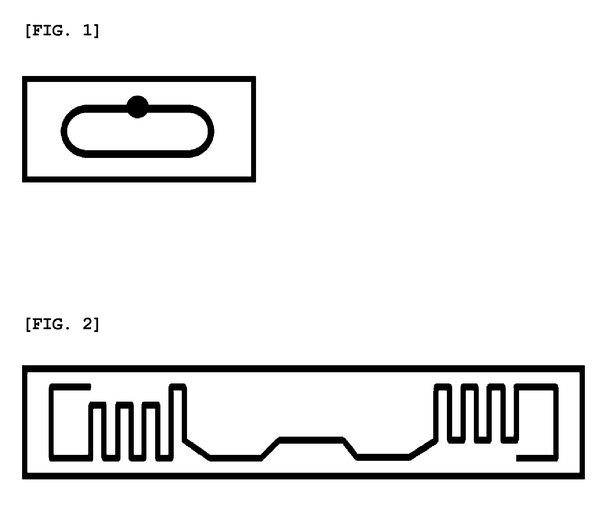

The patterns of FIGS. 1 and 2 were printed with silver paste on respective PET (polyethylene terephthalate) sheets, each 50 µm thick, using a flat screen printer. Heat treatment of the prints including the substrate was carried out at 150°C for 20 minutes to remove organic matters from the silver paste. As a result, a loop-patterned sheet and a dipole-patterned sheet were obtained.

A RFID chip was bonded to the loop-patterned sheet using anisotropic conductive paste (ACP) containing nickel powder. The RFID chip-bonded loop was measured for recognition distance using a portable reader (28dBm, 5dbi), and the results thereof are given in Table 1 below.

**[Table 1]**

| Recognition distance of loop | |
|---|---|
| Sample No. | Recognition distance (cm) |
| 1 | 8.3 |
| 2 | 8.1 |
| 3 | 8.6 |
| 4 | 9.7 |
| 5 | 8.8 |
| 6 | 8.0 |
| Average | 8.583 |

### Example 2

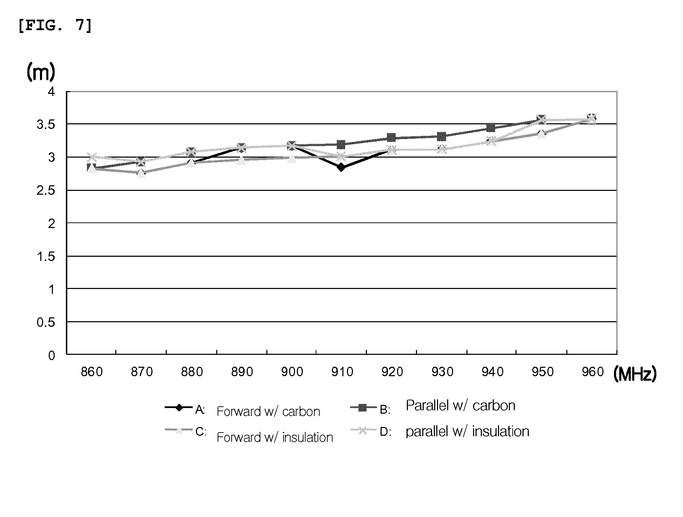

A double-faced adhesive tape made of a conductive carbon tape and one made of a general-purpose insulation tape was used for attaching the loop-patterned sheet to the dipole-patterned sheet. They are prepared in the same manner as in Example 1. Loop-patterned sheets and dipole-patterned sheets were disposed in a direction with the patterned sides facing each other (referred to as "forward direction") or in a direction with the patterned sides parallel to each other (referred to as "parallel direction"). The recognition distances and sensitivities of the UHF RFID tags are shown in Table 2 below and FIG. 7. The measurements of the recognition distances were carried out in a non-reflective chamber. As shown in Table 2 below and FIG. 7, slight improvements in the recognition distance were observed when the conductive tapes are used in forward direction to allow the loop-pattern and the dipole-pattern to touch each other.

**[Table 2]**

| Attaching of loop-patterned sheet and dipole-patterned sheet | | | | | | | | |
|---|---|---|---|---|---|---|---|---|
| | Sensitivity (dBm) | | | | Recognition distance(m) | | | |
| Direction and tape texture | 870 MHz | 880 MHz | 910 MHz | 920 MHz | 870 MHz | 880 MHz | 910 MHz | 920 MHz |
| Forward direction with carbon tape | -0.5 | -1 | -0.5 | -1 | 2.76 | 2.91 | 2.84 | 3.11 |
| Parallel direction with carbon tape | -1 | -1.5 | -1.5 | -1.5 | 2.93 | 3.08 | 3.19 | 3.29 |
| Forward direction with insulation tape | -0.5 | -1 | -1 | -1 | 2.76 | 2.91 | 3.01 | 3.11 |
| Parallel direction with insulation tape | -1 | -1.5 | -1 | -1 | 2.93 | 3.08 | 3.01 | 3.11 |

### Example 3

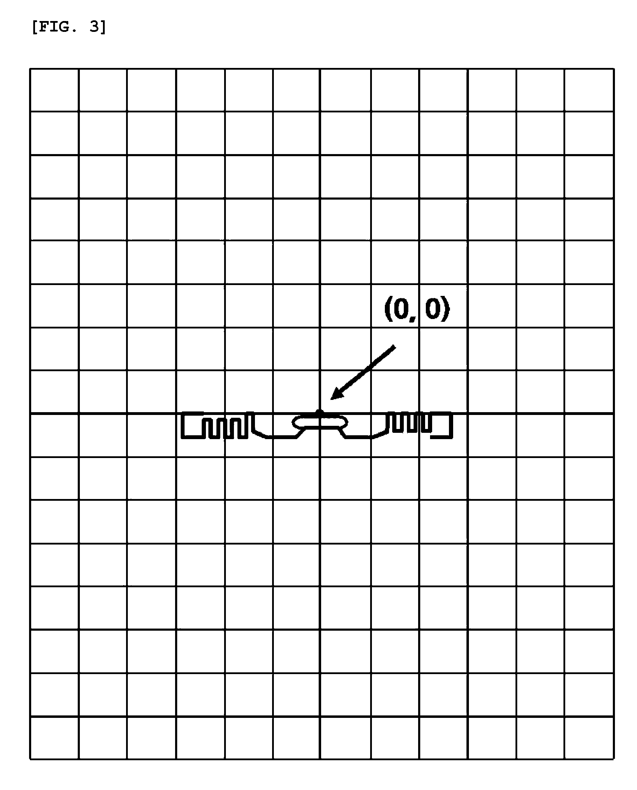

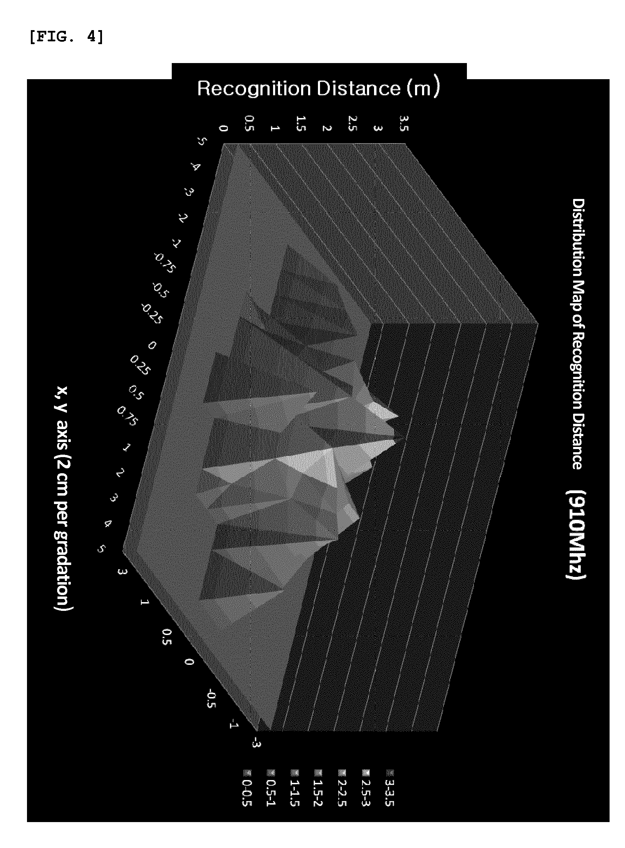

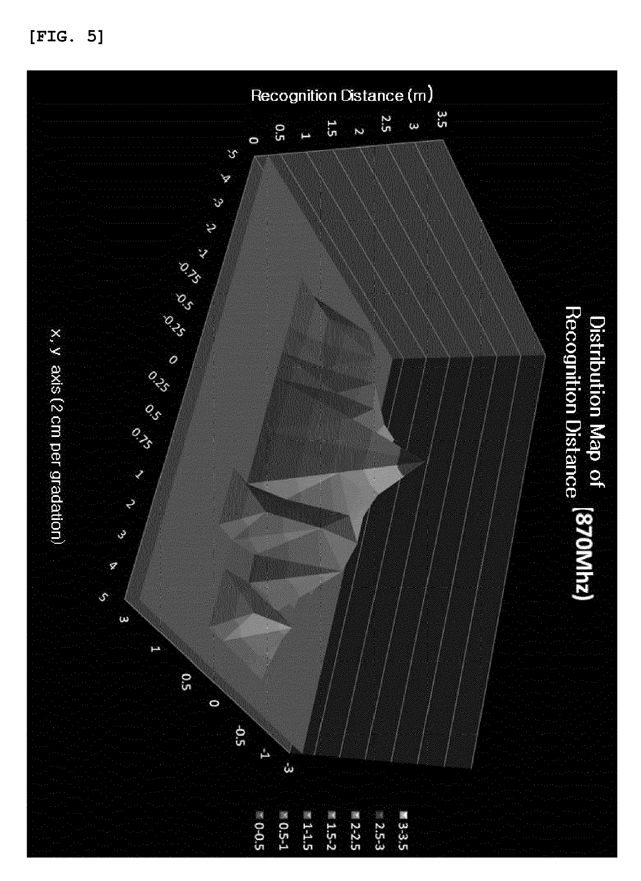

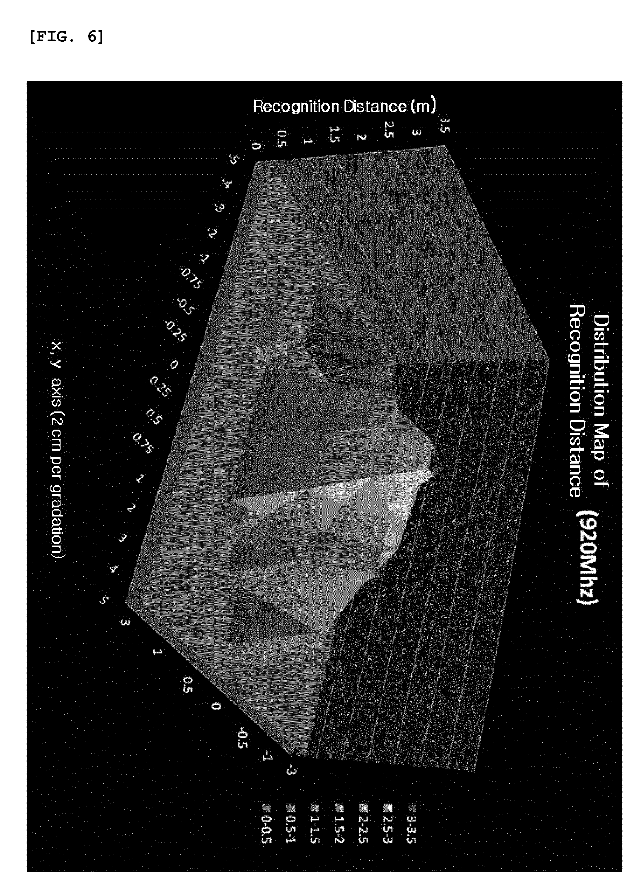

A double-faced adhesive tape made of general-purpose insulation tape was used for attaching the loop-patterned sheet to the dipole-patterned sheet which is prepared in the same manner as in Example 1 in order to accomplish a set of Rfid tag. A sheet of graph paper of A4 size for measurement ruled into 2 x 2 centimeter squares was prepared. A set of RFid tag with the loop-patterned sheet and the dipole-patterned sheet aligned correctly on the graph paper for measurement are shown in FIG. 3. While the dipole-patterned sheet was left alone, the loop-patterned sheet was attached to the dipole-patterned sheet in such manners that chips were located at the respective intersection points of gradations, and then the recognition distances and sensitivities according to sets of UHF RFID tags were measured at frequencies of 870 MHz (ETSI: European Telecommunication Standards Institute), 910 MHz (FCC: Federal Communications Commission) and 920 MHz. The results thereof are shown in Table 3 below and FIGS. 4 to 6. The measurements of the recognition distance were carried out in a non-reflective chamber. As shown in Table 3 below and FIGS. 4 to 6, it can be ascertained that, when the loop-patterned sheet and the dipole-patterned sheet are attached to each other without an intermediate, inconformity of 4 cm (coordinate value: 2) or less in the X axis (longitudinal direction) of an antenna and 10 cm (coordinate value: 0.5) or less in the Y axis of the antenna are tolerable. The coordinate value(x, y) of an RFid chip location on the graph paper for measurement represents the alignment degree in X axis and in Y axis respectively.

**[Table 3]**

| Recognition distance according to coordinate | | | | | | | | |
|---|---|---|---|---|---|---|---|---|
| | Sensitivity (dBm) | | | | Recognition distance (m) | | | |
| Coordinate | 870 MHz | 880 MHz | 910 MHz | 920 MHz | 870 MHz | 880 MHz | 910 MHz | 920 MHz |
| (0,0) | -1 | -1.5 | -1.5 | -1.5 | 2.93 | 3.08 | 3.19 | 3.29 |
| (1,0) | 3 | 2 | 1 | 1 | 1.85 | 2.06 | 2.39 | 2.47 |
| (2,0) | 20 | 20 | 20 | 20 | 0.26 | 0.26 | 0.27 | 0.28 |
| (3,0) | 7 | 5 | 4.5 | 4.5 | 1.17 | 1.46 | 1.6 | 1.65 |
| (-1,0) | 4.5 | 4.5 | 3.5 | 4 | 1.55 | 1.54 | 1.79 | 1.75 |
| (-2,0) | 6 | 5.5 | 5.5 | 6 | 1.31 | 1.38 | 1.43 | 1.39 |
| (-3,0) | 20 | 20 | 7.5 | 9.5 | 0.26 | 0.26 | 1.13 | 0.93 |
| (0,0.25) | 4.5 | 3 | 2 | 2 | 1.55 | 1.83 | 2.13 | 2.2 |
| (0,0.5) | 20 | 20 | 6 | 6 | 0.26 | 0.26 | 1.35 | 1.39 |
| (0,0.75) | 20 | 20 | 9.5 | 11 | 0.26 | 0.26 | 0.9 | 0.78 |
| (0,-0.25) | 2 | 1.5 | 1.5 | 1 | 2.07 | 2.18 | 2.26 | 2.47 |
| (0,-0.5) | 4.5 | 3.5 | 2 | 1.5 | 1.55 | 1.73 | 2.13 | 2.33 |
| (0,-0.75) | 20 | 20 | 5.5 | 5.5 | 0.26 | 0.26 | 1.43 | 1.47 |
| (-1,-1) | 20 | 20 | 20 | 20 | 0.26 | 0.26 | 0.27 | 0.28 |
| (1,-1) | 20 | 20 | 20 | 12 | 0.26 | 0.26 | 0.27 | 0.7 |
| (0.5,0.5) | 20 | 20 | 6 | 6 | 0.26 | 0.26 | 1.35 | 13.9 |
| (-0.5,0.5) | 20 | 20 | 6.5 | 7 | 0.26 | 0.26 | 1.27 | 1.24 |
| (-0.5,-0.5) | 3.5 | 2.5 | 1 | 1 | 1.74 | 1.94 | 2.39 | 2.47 |
| (0.5,-0.5) | 5 | 3.5 | 2 | 2 | 1.47 | 1.73 | 2.13 | 2.2 |
| (0.25,0.25) | 4 | 3 | 2 | 2 | 1.65 | 1.83 | 2.13 | 2.2 |
| (-0.25,0.25) | 4 | 3 | 1.5 | 1.5 | 1.65 | 1.83 | 2.26 | 2.33 |
| (-0.25,-0.25) | 5 | 4.5 | 3.5 | 3.5 | 1.47 | 1.54 | 1.79 | 1.85 |
| (0.25,-0.25) | 3.5 | 3.5 | 3 | 2.5 | 1.74 | 1.73 | 1.9 | 2.08 |
| (0.75,0.75) | 20 | 20 | 20 | 20 | 0.26 | 0.26 | 0.27 | 0.28 |
| (-0.75,0.75) | 20 | 20 | 20 | 11 | 0.26 | 0.26 | 0.27 | 0.28 |
| (-0.75,-0.75) | 20 | 20 | 10 | 5.5 | 0.26 | 0.26 | 0.85 | 1.47 |
| (0.75,-0.75) | 20 | 20 | 8.5 | 6 | 0.26 | 0.26 | 1.01 | 1.39 |

### Example 4

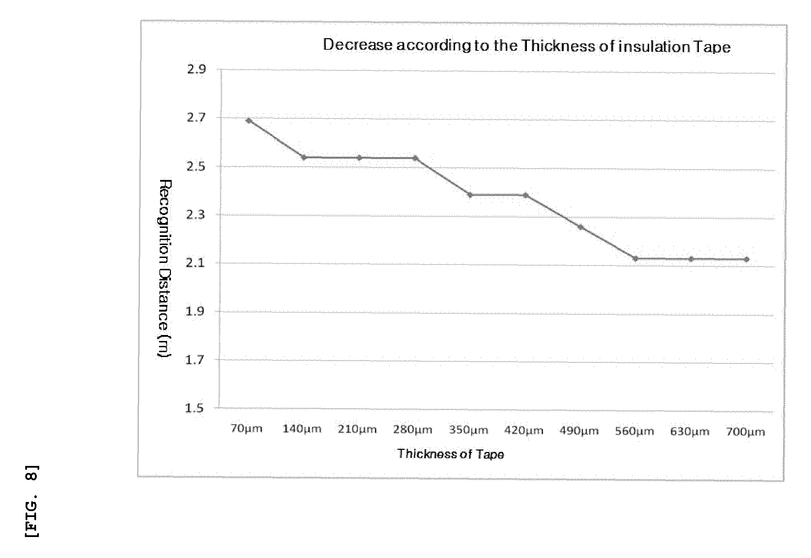

A double-faced adhesive tape made of general-purpose insulation tape was used for attaching the loop-patterned sheet to the dipole-patterned sheet which is prepared in the same manner as in Example 1 in order to accomplish a set of Rfid tag. In order to examine the decrease in the recognition distance of the UHF RFID tag according to the thickness of adhesive tape, the recognition distance of the UHF RFID tag were measured by repeatedly folding double-faced adhesive tape made of general-purpose insulation tape. The results thereof are shown in Table 4 and FIG. 8. The measurement of the recognition distance was carried out in a non-reflective chamber. As shown in Table 4 below and FIG. 8, it can be ascertained that the recognition distance is linearly decreased with the increase in the thickness of the insulation, but that the decrease in the recognition distance is tolerable while the thickness of the insulation tape is 1 mm or less.

**[Table 4]**

| Decrease in recognition distance according to thickness of tape (t= 70 µm) | | |
|---|---|---|
| Number of overlapping and sticking tape (times) | Recognition distance (m) | Total thickness (µm) |
| 1 | 2.69 | 70 |
| 2 | 2.54 | 140 |
| 3 | 2.54 | 210 |
| 4 | 2.54 | 280 |
| 5 | 2.39 | 350 |
| 6 | 2.39 | 420 |
| 7 | 2.26 | 490 |
| 8 | 2.13 | 560 |
| 9 | 2.13 | 630 |
| 10 | 2.13 | 700 |

### Example 5

A double-faced adhesive tape made of general-purpose insulation tape was used for attaching the loop-patterned sheet to the dipole-patterned sheet which is prepared in the same manner as in Example 1 in order to accomplish a set of Rfid tag. Five kinds of packing papers [paper cup (0.5mm thick), Box1 (1mm thick), Box2 (3mm thick), Box3 (5mm thick), Board rock (5mm thick], which differed from each other in thickness and material, were prepared at a size of 20cm x 20 cm. The loop-patterned sheet and the dipole-patterned sheet were attached to the outer face and to the inner face of the packing paper respectively in such manner that they were aligned with each other, and the recognition distances and sensitivity values of the UHF RFID tag were measured. The results thereof are given in Table 5 below. The measurements of the recognition distances were carried out in a non-reflective chamber. As given in Table 5 below, it can be ascertained that the recognition distances of the UHF RFID tags remarkably decrease when the thickness of the packing paper is 5 mm.

**[Table 5]**

| | Sensitivity (dBm) | | | | Recognition distance (m) | | | |
|---|---|---|---|---|---|---|---|---|
| Packing | 870 MHz | 880 MHz | 910 MHz | 920 MHz | 870 MHz | 880 MHz | 910 MHz | 920 MHz |
| Paper cup (t=0.5mm) | 1.5 | 0.5 | -0.5 | -0.5 | 2.2 | 2.45 | 2.84 | 2.94 |
| BOX 1 (t=1mm) | 0 | -1 | -1 | -0.5 | 2.61 | 2.91 | 3.01 | 2.94 |
| BOX 2 (t=3mm) | 6.5 | 5 | 4.5 | 4.5 | 1.23 | 1.46 | 1.6 | 1.65 |
| BOX 3 (t=5mm) | 20 | 20 | 20 | 20 | 0.26 | 0.26 | 0.27 | 0.28 |
| Board rock (t=5mm) | 20 | 20 | 20 | 20 | 0.26 | 0.26 | 0.27 | 0.28 |

## Claims

1. A set of UHF RFID tag consisting of a loop-patterned sheet on which a RFID chip is mounted so as to form a closed loop and a dipole-patterned sheet.

2. A set of UHF RFID tag according to claim 1, wherein the patterns on the loop-patterned sheet and on the dipole-patterned sheet are formed by direct printing method using conductive ink.

3. A set of UHF RFID tag according to claim 1, wherein substrates of the loop-patterned sheet and the dipole-patterned sheet are made of polyester, paper or polyimide.

4. A set of UHF RFID tag according to claim 2, wherein the loop-patterned sheet on which an RFID chip is mounted so as to form a closed loop, is continuously prepared by a roll to roll method.

5. a set of UHF RFID tag according to claim 1, wherein the loop-patterned sheet and the dipole-patterned sheet are disposed with insertion of packing paper having a thickness of 5 mm or less between each other or are aligned within a range of 4 cm or less in longitudinal direction of an antenna and 10 mm or less in lateral direction of the antenna from conformity.
